# EUROPEAN PATENT APPLICATION

(11) **EP 1 280 344 A2**
(43) Date of publication of application: **29.01.2003**
(21) Application number: 01310887.3
(22) Date of filing: 24.12.2001
(51) Int. Cl.: H04N 5/74

(54) **Projection display system**

(30) Priority: 26.07.2001 KR 2001045220
(71) Applicant: SAMSUNG ELECTRONICS CO., LTD., Suwon-city, Kyungki-do 441-373 (KR)
(72) Inventor: Jung, Seung-tae, Bundang-gu, Seongnam-si, Gyeonggi-do (KR); Koh, Byeong-cheon, Bundang-gu, Seongnam-si, Gyeonggi-do (KR); Yeon, Cheol-sung, Paldal-gu, Suwon-si, Gyeonggi-do (KR); Cho, Kun-ho, Gwonseon-gu, Suwon-si, Gyenoggi-do (KR); Kim, Dae-sik, Paldal-gu, Suwon-si, Gyeonggi-do (KR)
(74) Representative: Robinson, Ian Michael

(57) **Abstract**

A projection display system having a screen (32) that displays an image formed by light projected from a projector (31), and that processes user control signals input by a user to transmit the user control signals to the projector (31). The projector (31) projects light to the screen to form an image thereon according to the user control signals output from the screen (32).

## Description

The present invention relates to a projection display system, and more particularly, to a projection display system having a projector and a screen.

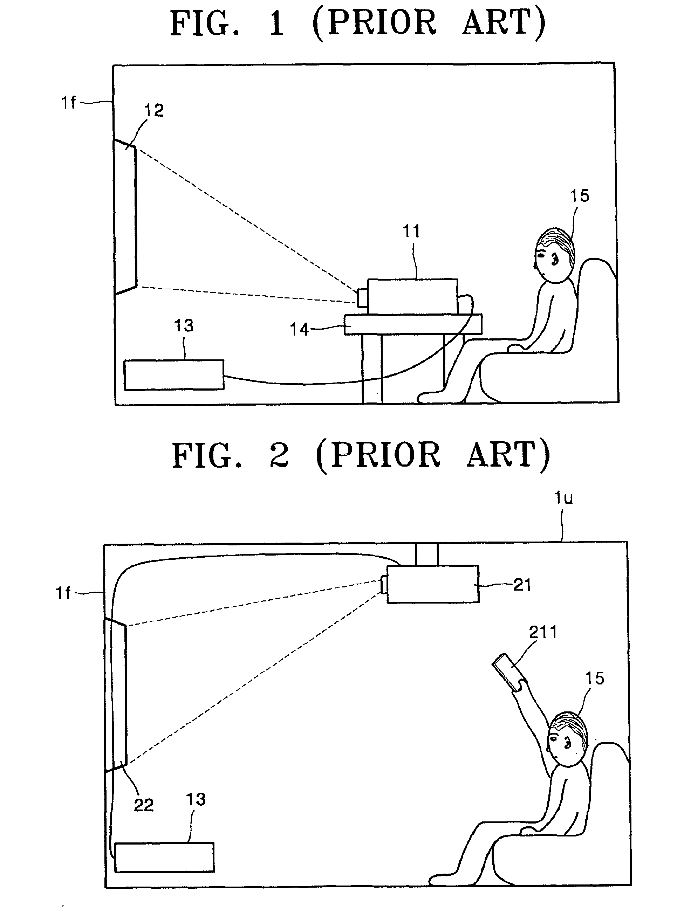

Figure 1 shows a first embodiment of a conventional projection display system. Referring to Figure 1, a projector 11 is placed on a desk, and a screen 12 is installed on a wall 1f. The projector 11 processes a video signal output from a video tape recorder 13, and projects light onto the screen 12 to form an image thereon. The projector 11 also processes an audio signal output from the video tape recorder 13 to generate sound. In this first embodiment of a conventional projection display system, there is a problem in that the projector 11 takes up space needed by a user 15.

Figure 2 shows a second embodiment of a conventional projection display system. Referring to Figure 2, a projector 21 is installed at a ceiling 1u, a screen 22 is installed on a wall 1f. The projector 21 processes a video signal output from a video tape recorder 13 and projects light onto the screen 22 to form an image thereon. The projector 21 also processes an audio signal output from the video tape recorder 13 to generate sound. The user 15 uses a remote controller 211 to control the operation of the projector 21. In this second embodiment of a conventional projection display system, the projector 21 is installed at the ceiling 1u. Thus, there is a problem in that the user 15 must transmit remote control signals to the ceiling 1u, the attachment to the ceiling 1u may become unstable and the ceiling 1u may be rendered aesthetically displeasing.

It is an aim of the present invention to provide a projection display system which does not take up space needed by a user, preferably which is convenient for a user to operate, and preferably which has improved stability and aesthetic value.

According to the present invention there is provided a projection display system having a projector and a screen. The screen displays an image formed by light projected from the projector and processes user control signals input by a user to transmit the user control signals to the projector. The projector projects light to the screen to form an image thereon according to the user control signals output from the screen.

In the projection display system of the present invention, a user can transmit control signals toward the screen. Thus, it is convenient for the user to operate the projection display system. Also, the projector can be installed on a wall behind the user, and thus the projection display system does not occupy the user's needed space and stability and aesthetics can be improved.

Preferably, the screen receives a video signal, an audio signal, and a television signal, generates sound based on the audio signal and an audio signal derived from the television signal, and radio transmits the video signal and a video signal derived from the television signal to the projector. The projector processes the video signals output from the screen projects light to the screen to display an image thereon. As a result, sound is generated from the screen, thus providing a more realistic audio and visual experience.

For a better understanding of the invention, and to show how embodiments of the same may be carried into effect, reference will now be made, by way of example, to the accompanying diagrammatic drawings in which:
Figure 1 shows a first embodiment of a conventional projection display system;
Figure 2 shows a second embodiment of the conventional projection display system;
Figure 3 shows an embodiment of a projection display system of the present invention;
Figure 4 shows the front of a screen of the projection display system shown in Figure 3; and
Figure 5 is a block diagram showing the circuit configuration of the projection display system shown in Figure 3.

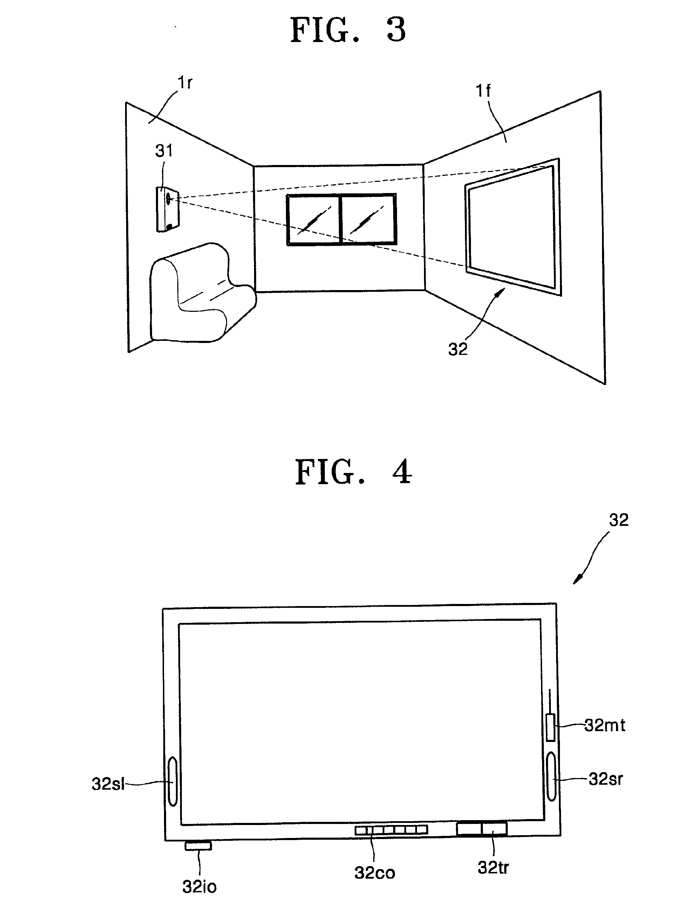

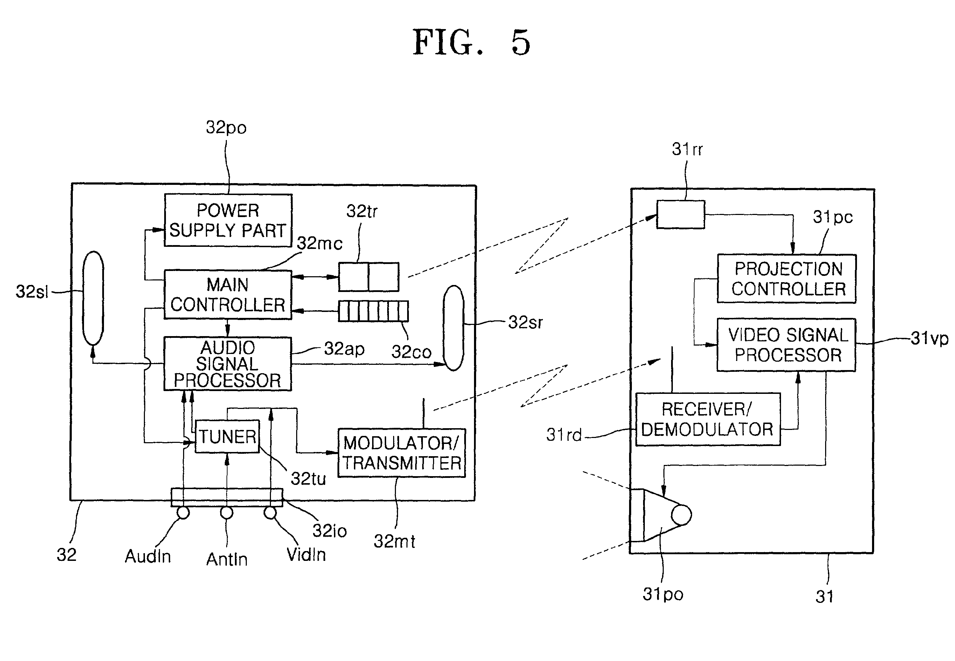

Figure 3 shows an embodiment of a projection display system of the present invention. Figure 4 shows the front of a screen of the projection display system shown in Figure 3. Figure 5 is a block diagram showing the circuit configuration of the projection display system shown in Figure 3.

Referring to Figures 3, 4, and 5, a projection display system according to the present invention includes a projector 31 and a screen 32. The screen 32 displays an image by receiving light projected from the projector 31 and processes control signals input by a user and transmits the control signals to the projector 31. The projector 31 operates according to the control signals output from the screen 32 and projects light onto the screen 32 to form the image. In the projection display system according to the present invention, the user can transmit the control signals toward the screen 32 installed on a wall If in front of the user. Thus, it is convenient for the user to operate the projection display system. Also, the projector 31 may be installed on a wall 1r behind the user. As a result, the projection display system does not occupy the user's space and stability and aesthetics are improved.

The screen 32 receives a video signal, an audio signal, and a television signal, generates sound according to the audio signal and an audio signal derived from the television signal, and radio transmits the video signal and a video signal derived from the television signal to the projector 31. The projector 31 processes a video signal output from the screen 32 and projects light onto the screen 32 to form an image. As a result, sound is generated from the screen 32, thus providing a more realistic audio and visual experience.

As shown in Figures 4 and 5, the screen 32 includes a signal input/output port 32io, a tuner 32tu, a modulator/transmitter 32mt, speakers 32sl and 32sr, an audio signal processor 32ap, a first remote transceiver 32tr, a main controller 32mc, a user controller 32co, and a power supply part 32po.

The signal input/output port 32io includes a video signal input terminal VidIn, an audio signal input terminal AudIn, and a television signal input terminal AntIn. The tuner 32tu tunes a television signal input from the television signal input terminal AntIn based on a tuning control signal input from the main controller 32mc to generate an audio signal and a radio frequency image signal. The modulator/transmitter 32mt modulates a video signal input to the video signal input terminal VidIn into a radio frequency image signal to radio transmit the radio frequency image signal to a receiver/demodulator 31rd of the projector 31. The modulator/transmitter 32mt receives the radio frequency image signal from the tuner 32tu and then radio transmits the radio frequency image signal to the receiver/demodulator 31rd of the projector 31. The speakers 32sl and 32sr generate sound according to audio signals input from the audio signal processor 32ap. The audio signal processor 32ap processes the audio signals input to the audio signal input terminal AudIn and output from the tuner 32tu to input them into the speakers 32sl and 32sr.

A first remote receiver in the first remote transceiver 32tr receives user control signals from a user's remote controller (not shown). The main controller 32mc processes tuning and sound control signals of the user control signals output from the first remote receiver in the first remote transceiver 32tr and from the user controller 32co to control the tuner 32tu and the audio signal processor 32ap. The main controller 32mc processes power control signals of the user control signals output from the first remote receiver in the first remote transceiver 32tr and from the user controller 32co to control the operation of the power supply part 32po. The main controller 32mc processes and outputs projection-image control signals of the user control signals output from the first remote receiver in the first remote transceiver 32tr. Here, the projection-image control signals are signals for controlling an image, which will be projected from the projector 31. The first remote receiver in the first remote transceiver 32tr radio transmits the projection-image control signals output from the main controller 32mc to a second remote receiver 31rr of the projector 31.

The projector 31 includes the receiver/demodulator 31rd, a video signal processor 31vp, the second remote receiver 31rr, a projection controller 31pc, and a projection output part 31po. The receiver/demodulator 31rd receives, demodulates and outputs the radio frequency image signal output from the modulator/transmitter 32mt in the screen 32. The video signal processor 31vp processes a video signal output from the receiver/demodulator 31rd to generate display driving signals. The second remote receiver 31rr receives the projection-image control signals from the first remote receiver in the first remote transceiver 32tr of the screen 32. The projection controller 31pc controls the operation of the video signal processor 31vp depending on the projection-image control signals output from the second remote controller 32rr. The projection output part 31po includes a lens and a display panel, e.g., a liquid display panel to create an image according to the display driving signals output from the video signal processor 31vp and project light to the screen 32.

As described above, in a projection display system according to the present invention, a user can transmit control signals toward a screen. Thus, it is convenient for the user to operate the projection display system. Also, a projector can be installed on a wall behind the user, and thus the projection display system does not occupy the user's needed space and stability and aesthetics can be improved.

The present invention should not be interpreted as being restricted to the above-described embodiment. It will be apparent to one of ordinary skill in the art that modifications may be made thereto without departing from the scope of the invention defined in the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A projection display system comprising:
a projector (31) for projecting light to form an image; and
a screen (32) for receiving the light and displaying the image;
wherein the screen (32) processes user control signals input by a user and transmits the user control signals to the projector (31), and the projector (31) operates according to the user control signals output from the screen (32).

2. The projection display system of claim 1, wherein the screen (32) receives a video signal, an audio signal, and a television signal, generates sound based on the audio signal and an audio signal derived from the television signal, and radio transmits the video signal and a video signal derived from the television signal to the projector (31), and the projector processes the video signals output from the screen projects light to the screen to display an image thereon.

3. The projection display system of claim 2, wherein the screen (32) comprises:
a signal input/output port (32io) having a video signal input terminal, an audio signal input terminal, and a television signal input terminal;
a tuner (32tu) for tuning a television signal input to the television signal input terminal into a tuning control signal input to generate an audio signal and a radio frequency image signal;
a modulator/transmitter (32mt) for modulating a video signal input to the video signal input terminal into a radio frequency image signal and radio transmitting the radio frequency image signal output from the tuner to the projector (31) ;
at least one speaker (32sl,32sr) for generating sound based on an audio signal input;
an audio signal processor (32ap) for processing an audio signal input to the audio signal input terminal and the tuner to input the audio signal to the at least one speaker;
a first remote receiver (32tr) for receiving user control signals input from a user's remote controller;
a main controller (32mc) for processing tuning and sound control signals of the user control signals output from the first remote receiver to control the tuner and the audio signal processor and for processing and outputting projection-image control signals of the user control signals output from the first remote receiver; and
a first remote transmitter (32tr) for radio transmitting the projection-image control signals output from the main controller to the projector.

4. The projection display system of claim 3, wherein the projector comprises:
a receiver/demodulator (31rd) for receiving the radio frequency image signal output from the modulator/transmitter (32mt) and demodulating the radio frequency image signal into a video signal and outputting the video signal;
a video signal processor (31vp) for processing the video signal output from the receiver/demodulator to generate display driving signals;
a second remote receiver (31rr) for receiving the projection-image control signals output from the first remote transmitter;
a projection controller (31pc) for controlling the operation of the video signal processor according to the projection-image control signals output from the second remote receiver; and
a projection output part (31po) for projecting light to the screen to create an image thereon according to the display driving signals output from the video signal processor.
